# EUROPEAN PATENT SPECIFICATION

(11) **EP 2 007 193 B1**
(45) Date of publication and mention of the grant of the patent: **09.01.2013**
(21) Application number: 06748955.9
(22) Date of filing: 31.03.2006
(51) Int. Cl.: A01K 29/00, A01K 1/01

(54) **ANIMAL LITTER DEVICE**
TIERSTREUVORRICHTUNG
DISPOSITIF POUR LITIÈRE ANIMALE

(43) Date of publication of application: 31.12.2008
(73) Proprietor: T.F.H. Publications, Inc., Neptune City, NJ 07753 (US)
(72) Inventor: AXELROD, Glen, S., Colts Neck, New Jersey 07722 (US); ASKINASI, Barry, Mt. Sinai, New York 11766 (US)
(74) Representative: Lippert, Stachow & Partner
(86) International application number: PCT/US2006/011707
(87) International publication number: WO 2007/114805

(56) References cited:
- WO-A1-83/00980
- FR-A1- 2 602 643
- US-A- 3 071 110
- US-A- 4 011 837
- US-A- 4 376 365
- US-A- 4 787 334
- US-A- 5 156 640
- US-A- 5 289 799
- US-A- 5 715 772
- US-B1- 6 585 713
- US-B2- 6 827 035

## Description

### FIELD OF INVENTION

The present invention relates to an automatic animal waste disposal device. More specifically, the present invention relates to a device that contains a roll of waste collection material that, after use, may be advanced with the option to self-seal to prevent the spread of odor and increase cleanliness.

### BACKGROUND

Pet owners, particularly those who have domesticated dogs, must often take their pets outside so that the pet may urinate and/or defecate. This process may become difficult when the pet owner lives in a confined environment, such as crowded city areas, or lives in an environment that becomes particularly cold during the year. Additionally, the process may also become difficult when the pet owner lacks mobility or is required to be away from the pet during long portions of the day.

It is known to provide a litter box for domesticated animals, particularly felines. In a simple form, litter boxes are boxes that contain a dry absorbent substance, generally known as litter, in which the animal may urinate or defecate. However, litter boxes present a number of problems such as odor, uncleanness (particularly due to handling of litter by owners and tracking of litter by pets) and general difficulties in cleaning out the litter.

Numerous advances have been made to litter boxes to avoid these problems. Examples include but are not limited to the following. U.S. Patent No. 5,749,318 discloses a litter box which cleans itself automatically, and separates the soiled litter from the clean litter, storing the soiled litter in a receptacle and replacing the consumed litter by clean reserve litter. U.S. Patent No. 6,119,629 discloses a simplified and easy to use cat litter box comprising an oval support member configured for attachment to the inside surface of a conventional toilet bowl, a removable tray slidably inserted through an opening in the front side of the oval support member which is configured to cover the toilet bowl opening and upon which flushable cat litter is placed during use, and stationary teeth attached to the inside front surface of the oval support member which engage the upper surface of the removable tray as it is slidably withdrawn from the front opening to empty used flushable cat litter directly into the toilet bowl for flushing.

U.S. Patent No. 6,457,435 discloses a pet toilet that has electronic sensing detection devices built within its parallel walls of a housing. U.S. Patent No. 6,378,461 discloses a self-cleaning litter box for cats employing a comb drive to drive a comb through litter to remove waste from the litter. U.S. Patent No. 6,701,868 discloses a self-cleaning cat litter box apparatus comprising a litter tray for containing a quantity of cat litter, a waste bin, and a mesh basket sized for having lower regions received into the litter.

U.S. Patent No. 5,592,900 a portable electromechanical apparatus for easily and hygienically managing and disposing of pet wastes. U.S. Patent No. 6,827,035 discloses a self-cleaning liter box assembly for liter using pets, which is capable of providing new liter and disposing of soiled litter for extended periods while minimizing human contact.

FR 2602243 discloses features of the preamble of claim 1.

While these devices certainly contribute to the art of providing a waste collection and disposal devices for pet, there still remains a need for advancement.

It is an object of the present invention to provide a waste collection device that may cleanly disposes of pet waste. It is also an object of the present invention which may also minimize the odors associated with pet waste removal. It is a further object of the present invention to provide a semi-automated method of waste disposal.

### SUMMARY

One embodiment of the present invention relates to a waste disposal pad for an animal adapted for use on a feed section and a take up section, comprising an absorbent pad having a first and second surface adapted for use between a feed roll and a take-up roll. The pad includes a surface sealing feature, wherein the first surface of the absorbent pad is adapted to contact the second pad surface when positioned on the take-up roll. The surface sealing feature provides a seal when the first pad surface contacts the second pad surface.

Another embodiment of the present invention relates to a waste disposal device for an animal including a housing having a first and second end sections, and a bottom surface. A feed section is included that is removably and rotatably affixed to the housing at one of the first or second end sections, along with a take-up section removably and rotatably affixed to the housing at one of the first or second end sections; an absorbent pad having a first and second surface between the feed section and the take-up section wherein the pad includes a surface sealing feature. The first surface of the absorbent pad is adapted to contact the second pad surface when positioned on the take-up section; the surface sealing feature providing a seal when the first pad surface contacts the second pad surface.

Another embodiment of the present invention relates to a method for automatic waste disposal comprising providing a take-up section for an absorbent pad having first and second surfaces. The pad includes a surface sealing feature, and wherein the first surface of the absorbent pad is adapted to contact the second pad surface when positioned on the take-up section, the surface sealing feature providing a seal when the first pad surface contacts the second pad surface. Upon take-up of the absorbent pad by the take up section there is contact between the first pad surface to the second pad surface thereby providing a seal.

### BRIEF DESCRIPTION OF DRAWINGS

**FIG.1** is a perspective view of an embodiment of the present invention.
**FIG. 2** is a perspective view of another embodiment of the present invention.
**FIG. 3** is a perspective view of another embodiment of the present invention.
**FIG. 4** is a perspective view of another embodiment of the present invention.
**FIG. 5** is a perspective view of another embodiment of the present invention.
**FIG. 6** is a close up perspective view of an aspect of the embodiment of **FIG. 5****.**
**FIG. 7** is a cross sectional view of an embodiment of the absorbent material of the present invention.
**FIG. 8** is a cross sectional view of another embodiment of the absorbent material of the present invention.
**FIG. 9** is a cross sectional view of another embodiment of the absorbent material of the present invention.
**FIG. 10** is a top view of another embodiment of the absorbent material of the present invention.
**FIG.11** is a perspective view of another embodiment of the present invention.
**FIG. 12** is a cross sectional view of another embodiment of the present invention.
**FIG. 13** is a cross sectional view of another embodiment of the present invention.
**FIG. 14** is a perspective view of another embodiment of the present invention.

### DETAILED DESCRIPTION

The present invention relates to providing a semi-automatic disposal of animal waste. In particular, the present invention utilizes a roll of waste collecting material that, once soiled, may be advanced and fastened to minimize odor and increase cleanliness.

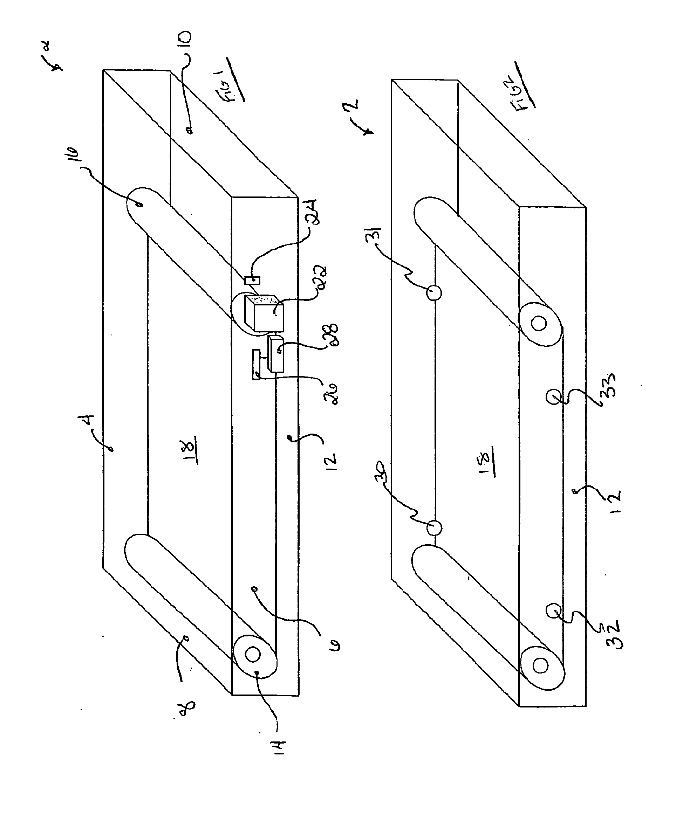

Turning to **FIG. 1****,** in one embodiment of the present invention, a housing **2** is provided. The housing may have a plurality of side walls **4, 6** and a front and back wall, **8** and **10,** respectively, as well as a bottom surface **12.** The housing may contain a feed roll **14** and a take up roll **16** of absorbent pad **18.** The rolls may be rotatably and removably seated inside of the housing **2.**

It should be understood that while a feed roll and take up roll are illustrated other means to provide and remove the absorbent sheet are contemplated. For example, the absorbent pad may be provided from a feed section that may be among other things a folded stack and collected into a secondary folded stack.

Preferably, take up roll **16** may have a reduced diameter near at or near the center portion of the roll to accommodate for animal waste that is isolated between the layers of the absorbent pad. Furthermore, take up roll **16** may be rotated by a motor **22** located in proximity to the take up roll **16.** However, a manual crank may also present to turn the take up roll **16** in case of lost power or due to preference of the pet owner.

Motor **22** may be actuated by a manual switch **24** or it may be actuated by a sensor **26** connected to a microprocessor **28** which is connected to the motor **22.** The manual switch may be presented upon the side (as illustrated) or on a portion of the housing and made easily accessible. Once the sensor has been triggered, a signal is sent to a microprocessor **28** to trigger a logic series or other mechanism, such as a simple timing device, that determines whether it is necessary to actuate motor **22.**

Triggering and placement of the sensor and operation of the logic series could be operated by steps or devices known to a person of ordinary skill in the art. Preferably the sensors contemplated in the present invention may include, but would not be limited to, weight/pressure sensors, moisture sensors, optical sensors or motion sensors. Also preferably, the actuation of the motor in the present invention contemplates the detection and accommodating for the departure of the animal from the absorbent pad prior to take up of the absorbent pad. This would prevent the pet from being startled, and it may ensure the pet's safety, when utilizing the subject device.

**FIG. 2** depicts in perspective view the use of guide rollers **30,31,32,33,** to guide the absorbent material **18** along the bottom surface **12** of the housing **2.** These rollers may be placed at opposing locations, for example two near each edge of the absorbent material proximate to the feed roll **14** and two near each edge of the absorbent material proximate to the take up roll **16**. However, it should be appreciated that multiple configurations of the guide rollers are contemplated in the present invention. The guide rollers therefore may, among other things, function to maintain absorbent material **18** at or near the bottom surface **12** of the container.

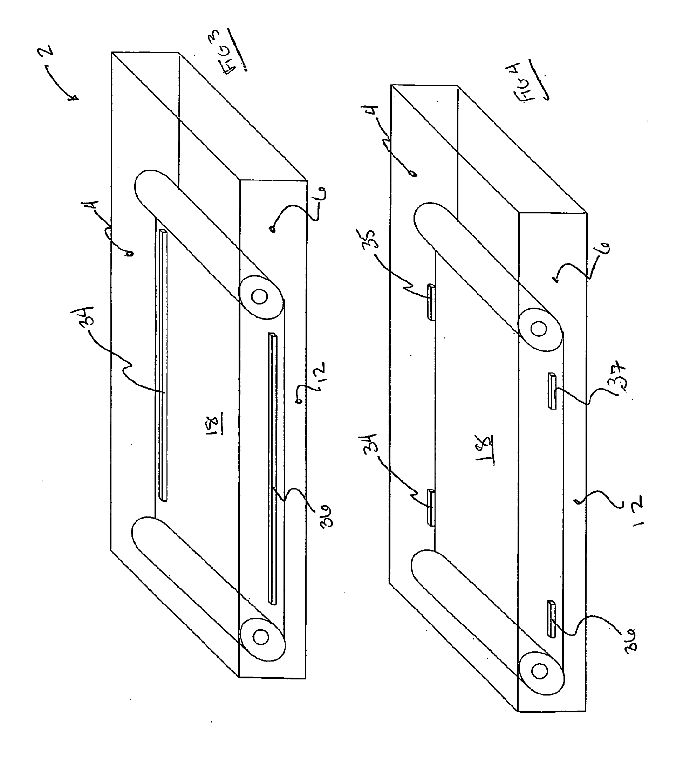

Instead of guide rollers **30,31,32,33,** a series of guide strips **34, 36** may be used to maintain the absorbent material **18** near the bottom surface **12** of the housing **2**, as depicted in **FIG. 3****.** The guide strips **34, 36** may be a single strip located on each side **4, 6** of the housing **2,** seen in **FIG. 3****,** or may be multiple strips **34, 35, 36, 37** at spaced locations, seen in **FIG. 4****.**

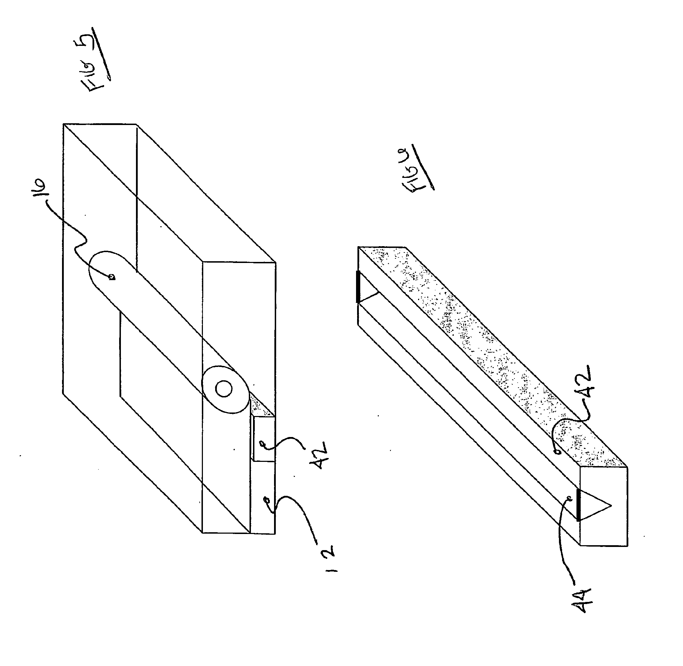

Furthermore, as seen in **FIG. 5****,** a surface **42** may be provided upon which a cutting device may travel. The surface **42** may be provided proximate the take up roll **16** near the bottom surface **12.** The surface **42** may include a groove **44** and illustrated in **FIG. 6** to accommodate the blade of a cutting device in which the cutting device may travel.

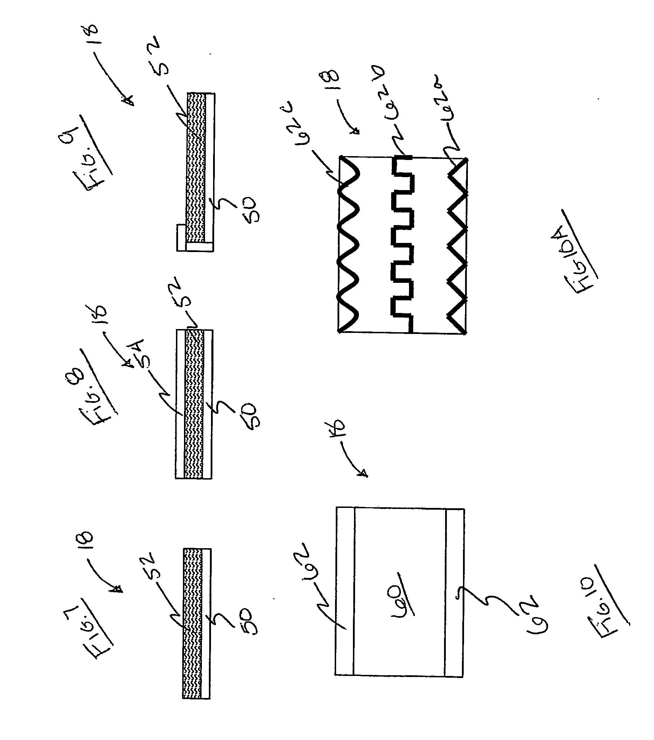

As seen in **FIG. 7****,** preferably, the absorbent pad **18** has a moisture barrier layer **50** and an absorbent layer **52**. Optionally, additional layers may be contemplated on top of or in between the layers to aid in the absorption and retention of the both the liquid and solid waste material such as including a moisture permeable facing **54** as seen in **FIG.8****.** Furthermore, depicted in **FIG. 9****,** the moisture barrier layer **50** may be used to bind the edges of the absorbent pad **18** so as to border (as shown) the absorbent layer **52** and any other layer included in the absorbent pad.

As noted above, the present invention employs a pad that includes a surface sealing feature, wherein said first surface of said absorbent pad is adapted to contact said second pad surface when positioned on said take-up roll and the surface sealing feature provides a seal when the first pad surface contacts the second pad surface. It should be understood that reference to providing a seal broadly includes simply engaging of the first and second pad surfaces, such that solid waste, e.g., is only physically trapped within the absorbent pad surfaces. Alternatively the seal may be such that the surfaces of the pad are sealed airtight, such that the waste is completely sealed from the surrounding environment.

As seen in **FIG. 10****,** which shows a top view of the pad, the absorbent pad **18** may have two edge portions. The first edge portion **60** of the absorbent pad **18** and the second edge portion **62.** These edge portions may be designed to assist in sealing the absorbent pad **18** as it is rolled up on the take up roll **16.** It can also be appreciated that such edge portions may appear on either the top or bottom surface of the pad **18.**

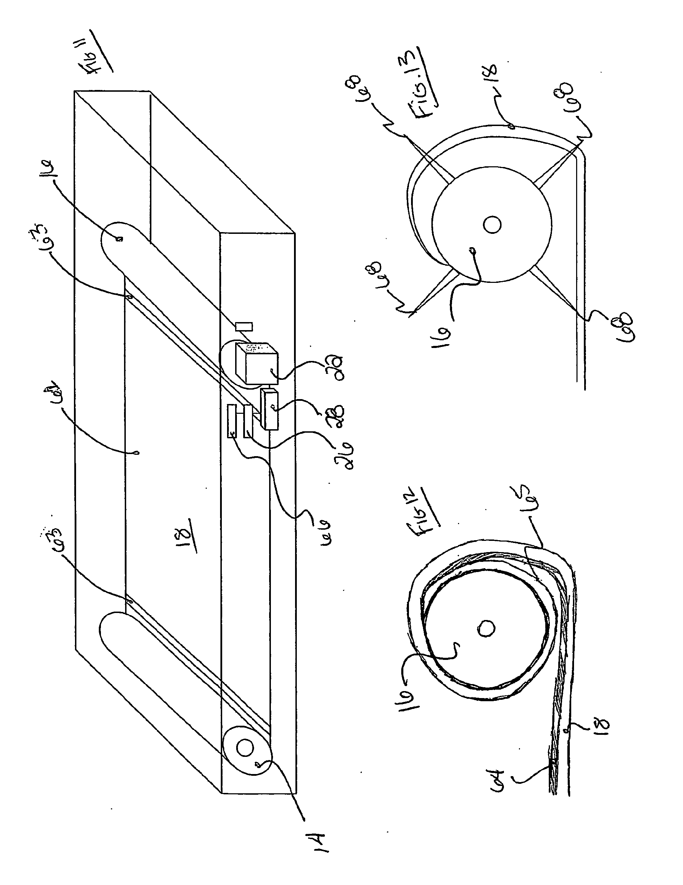

By way of example as to how the roll layers may be sealed together using second portion **62,** which contains a coating of adhesive **64,** and with attention directed to **FIG. 12****,** when one rolls up the second or edge portion **62** with adhesive **64,** the adhesive will bind with an opposing rolled-up portion of the absorbent pad, which will occur generally at **65.** Alternatively, it can be appreciated that the second portion **62** may simply be greater in thickness than the first portion **60** of the absorbent pad **18** to accommodate for increased in volume of the absorbent pad **18** due to carrying or absorption of the animal excrement.

Furthermore the pad may include portion **61,** which may also comprise an adhesive or thicker cross-section at **63,** to assist in sealing the pad on the take-up roll **16.** These section **63** may be located at spaced intervals along the length of the absorbent pad 18. See **FIG. 11****.** Accordingly, as the pad **18** is advanced the section **63** is preferably located perpendicular to the edges. It can be appreciated that the features **62** (see **FIG. 10****)** and **63** (see FIG. **11****)** may also include other configurations such as a plurality of such surface sealing features disposed on the absorbent pad. In this manner, when the pad is rolled up on the take-up roll, and plurality of surface sealing surfaces are allowed to come in contact with the absorbent and thereby provide enhanced sealing of an odor-causing waste. Preferably, the absorbent pad may be described as having a length and a width, wherein the width is defined by two edges, and the surface sealing feature is located at an angle intersecting the edges.

In addition, the surface sealing feature may be of different geometries, such as a planar zig-zag, sawtooth, sinusoidal, or other geometric patterns, running along with width or length of the absorbent pad. See FIG. 10A which illustrates a zig-zag **62a,** sawtooth **62b** or sinusoidal configuration **62c** for the surface sealing feature

To properly locate the features **63** in a relation relative to the feed roll **14** and take up **roll 16** a secondary sensor **66** may be used to turn off the motor **22** once the feature **63** of the absorbent pad **18** has reached a desired location, wherein the features **63** does not interfere with the animal when the animal contacts the pad **18.** The secondary sensor **66** may also be connected to the motor **22** or microprocessor **28.** Triggering and placement of the secondary sensor **66** and operation of the logic series could be operated by steps or devices previously described herein.

Another example as to how the roll layers may be sealed together is illustrated in **FIG. 13****.** In this embodiment the take up roll **16,** may have a plurality of projections **68.** which may appear along the entire length of the roll, or at spaced intervals on the roll. As the absorbent pad **18** is advanced onto the take up roll **16,** the projections **68** pierce the absorbent pad **18,** lodging the absorbent pad **18** onto the take up roll **16.** Used alone or in combination with the adhesive **64,** prevents seepage of any excrement through the absorbent pad **18** when on the take up roll 16.

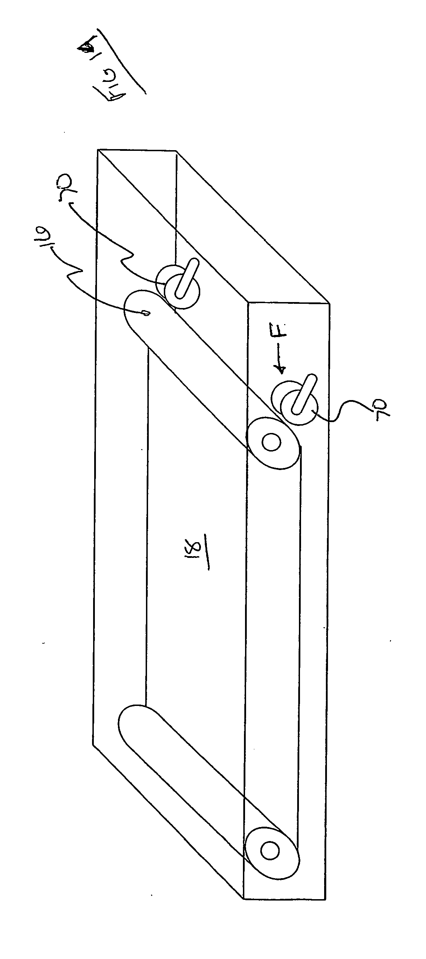

Furthermore, as illustrated in **FIG. 14****,** a pressure roll **70,** or multiple pressure rolls, may be provided to exert a force, **F,** upon the absorbent pad **18.** The pressure roll **70** may be self adjusting to accommodate the diameter of the absorbent pad **18** upon the take up roll **16.** Such force, used alone or optionally in combination with an adhesive **64 (****FIG. 12****)** or at spaced intervals between projections on the roll illustrated in **FIG. 13****,** provide another technique to seal the absorbent pad on the take-up roll **16.**

Turning to the absorbent pad described herein. The absorbent pad may be a substantially rectangular piece of absorbent material that may be wound about a feed roll. Generally, the absorbent pad may comprise a moisture proof barrier and an absorbent layer. However, the absorbent pad may be a single layer of absorbent material.

The absorbent layer may be composed of an absorbent fabric such as, a nonwoven or woven material, sheets of paper, wood fluff or other absorbent materials. Furthermore, granular super absorbent polymer may be incorporated into the absorbent pad.

The moisture barrier layer may be composed of a waterproof paper, a synthetic resin material or a metal foil. In the case where the moisture barrier layer is composed of a synthetic resin material, the resin material may be a polyolefin such as polypropylene or a polyethylene (including high density polyethylene, low density polyethylene and linear low density polyethylene), polyvinyl chloride, polyamide or polystyrene. Furthermore, the moisture barrier layer may be composed of multiple thermoplastic material layers, wherein the additional layer may comprise any of the previously mentioned material as well as ethylene vinyl acetate or cellophane.

In addition, the absorbent and/or the such moisture barrier layer may contain three-dimensional features to accommodate the waste volume collected on the pad after utilized by the animal. In other words, the features provide a recess in the surface of the pad such that the recess itself provides a volume for waste to collect and more evenly distribute over the pad surface.

Furthermore, a deodorizer or an attractant scent may be incorporated into or onto the absorbent or moisture proof layer. The deodorizer may help to control odors and the attractant may be used to attract the pet to use the absorbent pad for a litter area. In one preferred embodiment, a deodorizer is incorporated into the moisture barrier layer which may contain more than one synthetic resin layer.

In one embodiment in which the moisture barrier layer is a polymeric film layer, the moisture barrier layer may be extruded. However, other methods are contemplated, such as calendaring or blown film extrusion or cast film. In another embodiment, where there are multiple layers of a barrier film, the layers of the film may be co-extruded or laminated together.

Additional layers may be included in the absorbent pad. In one embodiment a top sheet layer may be provided to prevent the absorbent layer from becoming caught in the animal's paws. This may apply in those situations where the pad has a loft and can lend itself to becoming attached to the claw of an animal. The top sheet may also be a nonwoven or woven material of thermoplastic or organic material.

In further embodiment, an adhesive may be disposed between the moisture barrier layer and the absorbent layer or disposed between any additional layers that may be utilized to form a multi-layer absorbent pad construction. Materials that may be used in the top sheet of the absorbent pad include spunbonded polyolefins, spunbond/melt blown/spunbond polyolefins and carded polyolefins. Preferably, the polyolefin may be polypropylene or polyethylene (including high density polyethylene, low density polyethylene and linear low density polyethylene.) In that sense, the invention herein recognizes the advantage of providing a hydrophobic polymer at or near the surface, such that the animal waste is naturally transported into the inner regions of the pad, which may contain more hydrophilic type polymer material. This then provides a pad construction that may provide less odor after the pad has been utilized.

A housing may be formed to cover the feed roll and take up roll of the absorbent material leaving only a selective portion of the absorbent material for use by the animal. Furthermore, the housing may be formed to cover the edge portions of the absorbent pad so that if, for example, an adhesive is disposed on the edge portions of the pad (see again **FIG. 10****)** the animal will avoid contact with such adhesive surface.

The foregoing description is provided to illustrate and explain the present invention. However, the description hereinabove should not be considered to limit the scope of the invention set forth in the claims appended here to.

## Claims

1. A waste disposal pad for an animal adapted for use on a feed section and a take up section of a device for disposing of animal waste , comprising
an absorbent pad (18) having a length and a width and a first and second surface adapted for use between a feed section and a take-up section wherein said pad further includes a portion having a surface sealing feature, and wherein said first surface of said absorbent pad (18) is adapted to contact said second pad surface when positioned on said take-up section;
said surface sealing feature providing a seal when said first pad surface contacts said second pad surface wherein said absorbent pad itself has a cross-section thickness, and said surface sealing feature of said pad has a cross-sectional thickness and where the cross-sectional thickness of said sealing feature and the pad is greater than said pad cross-sectional thickness, **characterized in that** said pad surfaces include a hydrophobic polymer and said pad includes an inner region that includes a hydrophilic polymer wherein animal waste is transported from said hydrophobic polymer to said hydrophilic polymer within said pad
, and said surface sealing feature comprises an adhesive pattern along said length and/or width, said pattern selected from the group consisting of zig-zag, sawtooth, sinusoidal or mixtures thereof.

2. The waste disposal pad of claim 1, wherein said absorbent pad has a length and a width, said width defined by two edges, and said surface sealing feature is located on one or both of said edges defining said width.

3. The waste disposal pad of claim 1, wherein said absorbent pad has a length and a width, said width defined by two edges, and said surface sealing feature is located at an angle intersecting said edges.

4. The waste disposal pad of claim 1, wherein said pad includes a plurality of surface sealing features.

5. The waste disposal pad of claim 1, further comprising a moisture barrier layer (50) and an absorbent layer (52).

6. The waste disposal of claim 5, wherein said moisture barrier layer(50) is selected from the group consisting of waterproof paper, synthetic resin material, metal foil and combinations and layers there of.

7. The waste disposal pad of claim 6, wherein said synthetic resin material is selected from the group consisting of polyolefin, polyvinyl chloride, polyamide, polystyrene, ethylene vinyl acetate, cellophane and mixtures thereof.

8. The waste disposal pad of claim 5, wherein said absorbent layer(52) is selected from the group consisting of a nonwoven material, woven material, sheets of paper, wood fluff, super absorbent polymer and combinations thereof.

9. The waste disposal pad of claim 1, further comprising a top sheet.

10. The waste disposal pad of claim 9, wherein said top sheet comprises a material selected from the group consisting of a woven, a nonwoven and mixtures thereof.

11. The waste disposal pad of claim 9, wherein said top sheet comprises a material selected from the group consisting of a porous polymeric material.

12. The waste disposal pad of claim 9, wherein said top sheet further comprises a material selected from the group consisting of spunbound polyolefins, spunbond/melt blown/spunbond polyolefins and carded polyolefins.

13. The waste disposal pad of claim 1, further comprising additives selected from the group consisting of a deodorizer, an attractant and combinations thereof.

14. The waste disposal pad of claim 5, wherein said moisture barrier layer (50) covers the edges of the absorbent layer (52).

15. The waste disposal pad of claim 1, wherein at least one of said first and second surfaces of said absorbent pad (18) comprises a surface containing one or more recesses in said surface.

## Patentansprüche

1. Unterlage zur Entsorgung von Tierexkrementen, die für die Verwendung in einem Abgabeabschnitt und einem Aufnahmeabschnitt einer Vorrichtung zur Entsorgung von Tierexkrementen geeignet ist, umfassend:
eine absorbierende Zwischenlage (18) mit einer Länge und einer Breite und
mit einer ersten und einer zweiten Fläche, die für die Verwendung zwischen einem Abgabeabschnitt und einem Aufnahmeabschnitt geeignet ist, wobei die Unterlage ferner einen Bereich mit einem Oberflächenversiegelungsmittel aufweist und wobei die erste Fläche der absorbierenden Zwischenlage (18) bei Positionierung an dem Aufnahmeabschnitt für den Kontakt mit der zweiten Fläche der Zwischenlage ausgebildet ist;
wobei das Flächenversiegelungsmittel bei einem Kontakt der ersten Fläche der Zwischenlage mit der zweiten Fläche der Zwischenlage für eine Versiegelung sorgt, wobei die absorbierende Unterlage selbst eine Querschnittdicke hat und wobei das Oberflächenversiegelungsmittel der Unterlage eine Querschnittdicke hat und wobei die Querschnittdicke der Versiegelung und der Unterlage größer ist als die Querschnittdicke der Unterlage, **dadurch gekennzeichnet, dass** die Flächen der Unterlage ein hydrophobes Polymer aufweisen und dass die Unterlage einen Innenbereich mit einem hydrophilen Polymer aufweist, wobei Tierexkremente innerhalb der Unterlage von dem hydrophoben Polymer zu dem hydrophilen Polymer transportiert werden, und
wobei das Flächenversieglungsmittel entlang der Länge und/oder Breite ein Klebstoffmuster hat, das aus der Gruppe ausgewählt wird, die aus einem Zickzack-, Sägezahn- oder sinusförmigen Muster oder einem Mix derselben besteht.

2. Unterlage zur Exkrement-Entsorgung gemäß Anspruch 1, wobei die absorbierende Zwischenlage eine Länge und eine Breite hat, wobei die Breite durch zwei Kanten definiert wird und wobei sich das Flächenversiegelungsmittel an einer oder an beiden die Breite definierenden Kanten befindet.

3. Unterlage zur Exkrement-Entsorgung gemäß Anspruch 1, wobei die absorbierende Zwischenlage eine Länge und eine Breite hat, wobei die Breite durch zwei Kanten definiert wird und wobei das Flächenversiegelungsmittel in einem Überschneidungswinkel der Kanten angeordnet ist.

4. Unterlage zur Exkrement-Entsorgung gemäß Anspruch 1, wobei die Unterlage eine Mehrzahl von Flächenversiegelungsmitteln aufweist.

5. Unterlage zur Exkrement-Entsorgung gemäß Anspruch 1, ferner umfassend eine Feuchtigkeitssperrschicht (50) und eine Absorptionsschicht (52).

6. Unterlage zur Exkrement-Entsorgung gemäß Anspruch 5, wobei die Feuchtigkeitssperrschicht (50) ausgewählt wird aus der Gruppe, die aus wasserdichtem Papier, synthetischem Harzmaterial, Metallfolie und deren Kombinationen und Schichten besteht.

7. Unterlage zur Exkrement-Entsorgung gemäß Anspruch 6, wobei das synthetische Harzmaterial ausgewählt wird aus der Gruppe, die aus Polyolefin, Polyvinylchlorid, Polyamid, Polystyrol, Ethylenvinylacetat, Cellophan und deren Gemischen besteht.

8. Unterlage zur Exkrement-Entsorgung gemäß Anspruch 5, wobei die Absorptionsschicht (52) ausgewählt wird aus der Gruppe, die aus einem Vliesmaterial, Gewebematerial, Papierlagen, Holzzellstoffflocken, superabsorbierendem Polymer und deren Kombinationen besteht.

9. Unterlage zur Exkrement-Entsorgung gemäß Anspruch 1, ferner umfassend eine Decklage.

10. Unterlage zur Exkrement-Entsorgung gemäß Anspruch 9, wobei die Decklage ein Material umfasst, das ausgewählt wird aus der Gruppe, die aus einem Vlies, einem Gewebe und deren Mischungen besteht.

11. Unterlage zur Exkrement-Entsorgung gemäß Anspruch 9, wobei die Decklage ein Material umfasst, das ausgewählt wird aus der Gruppe, die aus einem porösen Polymermaterial besteht.

12. Unterlage zur Exkrement-Entsorgung gemäß Anspruch 9, wobei die Decklage ferner ein Material umfasst, das ausgewählt wird aus der Gruppe, die aus Spinnpolyolefinen, Schmelzspinn-, Blasspinnpolyolefinen und kardierten Polyolefinen besteht.

13. Unterlage zur Exkrement-Entsorgung gemäß Anspruch 1, ferner umfassend Additive, die ausgewählt werden aus der Gruppe, die aus einem desodorierenden Mittel, einem Lockstoff und deren Kombinationen besteht.

14. Unterlage zur Exkrement-Entsorgung gemäß Anspruch 5, wobei die Feuchtigkeitssperrschicht (50) die Kanten der Absorptionsschicht (52) bedeckt.

15. Unterlage zur Exkrement-Entsorgung gemäß Anspruch 1, wobei mindestens eine von erster und zweiter Fläche der absorbierenden Zwischenlage (18) eine Fläche umfasst, die eine oder mehrere Aussparungen in dieser Fläche enthält.

## Revendications

1. Nappe de traitement des excréments animaux, propre à son utilisation sur une section d'alimentation et une section de réception d'un dispositif pour le traitement des excréments animaux, la nappe comprenant
une couche absorbante (18) ayant une longueur et largeur et une première surface et deuxième surface, propre à l'utilisation entre une section d'alimentation et une section de réception, la couche comprenant en outre une partie avec un moyen de cachetage de surface et ladite première surface de ladite couche absorbante (18) étant arrangée pour contacter la deuxième surface lorsque celle-ci est positionnée à la section de réception ; ledit moyen de cachetage de surface créant une cachetage lorsque la première surface de la couche vient de contacter la deuxième surface de la couche, ladite couche absorbante (18) elle même ayant une épaisseur d'une section transversale, et ledit moyen de cachetage de surface de ladite couche ayant une épaisseur d'une section transversale, et l'épaisseur de la section transversale du moyen de cachetage et de ladite couche étant supérieure à l'épaisseur de la section transversale de ladite couche, **caractérisée en ce que** les surfaces de la nappe comportent un polymère hydrophobique et la nappe comporte une région intérieure qui comporte un polymère hydrophile, les excréments animaux étant transportées du polymère hydrophobique vers ledit polymère hydrophile à l'intérieur de la serviette,
et ledit moyen de cachetage de surface comprenant un motif d'un adhésif le long ladite longueur et/ou largeur, le motif étant choisi dans le groupe consistant en motifs en forme de chevron, de dents en scie, de sinus ou en mélanges d'eux.

2. Nappe de traitement des excréments selon la revendication 1, ladite couche absorbante ayant une longueur et une largeur, ladite largeur étant définie par deux arêtes et ledit moyen de cachetage de surface étant situé sur l'une ou les deux arêtes définissant ladite largeur.

3. Nappe de traitement des excréments selon la revendication 1, ladite couche absorbante ayant une longueur et une largeur, ladite largeur étant définie par deux arêtes et ledit moyen de cachetage de surface étant situé sous un angle d'intersection desdites arêtes.

4. Nappe de traitement des excréments selon la revendication 1, ladite couche comportant une pluralité de moyens de cachetage de surface.

5. Nappe de traitement des excréments selon la revendication 1, comprenant en outre une couche de barrière de l'humidité (50) et une couche absorbante (52).

6. Nappe de traitement des excréments selon la revendication 5, la couche de barrière de l'humidité (50) étant choisie dans le groupe consistant en papier imperméable, résine synthétique, film métallique, et combinaisons et couches d'eux.

7. Nappe de traitement des excréments selon la revendication 6, le matériau de résine synthétique étant choisi dans le groupe consistant en polyoléfine, chlorure de polyvinyle, polyamide, polystyrène, éthylène acétate de vinyle, cellophane et mélanges d'eux.

8. Nappe de traitement des excréments selon la revendication 5, la couche absorbante (52) étant choisie dans le groupe consistant en matériel non-tissé, matériel tissé, couches de papier, flocons de cellulose de bois, polymère super-absorbante, et combinaisons d'eux.

9. Nappe de traitement des excréments selon la revendication 1, comprenant en outre une couche extérieure.

10. Nappe de traitement des excréments selon la revendication 9, ladite couche extérieure comprenant un matériau choisi dans le groupe consistant en tissu, non-tissé et mélanges d'eux.

11. Nappe de traitement des excréments selon la revendication 9, ladite couche extérieure comprenant un matériau choisi dans le groupe consistant en matière de polymère poreuse.

12. Nappe de traitement des excréments selon la revendication 9, ladite couche extérieure comprenant an matériau chois dans le groupe consistant en polyoléfines non-tissés, tissés à chaud, tissés par soufflage et polyoléfines cardés.

13. Nappe de traitement des excréments selon la revendication 1, comprenant en outre des additifs choisis dans le groupe consistant en désodorisants et agents attirants et combinaisons d'eux.

14. Nappe de traitement des excréments selon la revendication 5, la couche de barrière de l'humidité (50) couvrant les arêtes de la couche absorbante (52).

15. Nappe de traitement des excréments selon la revendication 1, une au moins desdites première et deuxième surfaces de la couche absorbante (18) comportant une surface contenant un ou plusieurs évidements dans ladite surface.
